# EUROPEAN PATENT APPLICATION

(11) **EP 1 375 354 A1**
(43) Date of publication of application: **02.01.2004**
(21) Application number: 01903802.5
(22) Date of filing: 09.02.2001
(51) Int. Cl.: B65B 31/04, B65B 25/04, B65D 81/20, A23B 7/148

(54) **PACKAGED FOOD PRODUCT AND PRODUCTION METHOD THEREFOR**

(71) Applicant: Resticas del Guadalquivir, S.A., 41300 San José de la Rinconada (ES)
(72) Inventor: GANDIA GINER, José, E-41300 San José de la Rinconada (ES)
(74) Representative: Gomez-Acebo, Ignacio
(86) International application number: PCT/ES2001/000043
(87) International publication number: WO 2002/064430

(57) **Abstract**

The packaged food product comprises a sealed, plastic material package containing on the inside thereof fresh asparaguses, an aqueous solution comprising at least one food additive, and a gas filling comprising a mixture of oxygen, carbon dioxide and nitrogen. This fresh food product can be directly subjected to a cooking or boiling process without needing to perforate or open the package and remove the asparaguses. The process comprises: a) introducing the asparaguses and the aqueous solution comprising at least one food additive, into a plastic material package; b) removing all or part of the air contained inside of the package; c) adding a gas mixture comprising oxygen, carbon dioxide and nitrogen; and d) sealing the package.

## Description

### FIELD OF THE INVENTION

This invention is related to the food sector, particularly, to a packaged food product comprising fresh asparaguses packaged in a plastic material package which can be directly subjected to a cooking or boiling process without needing to perforate or open the package and remove the asparaguses. The invention also refers to a process for the conservation of said food product.

### BACKGROUND OF THE INVENTION

Asparaguses are highly appreciated vegetables because of their culinary properties. The duration of a fresh asparagus is very short, making its exportation difficult and expensive, thereby making it necessary to proceed to conserve them. In this sense, canned asparaguses are known which are packaged in glass jars or in metal cans containing whole or chopped asparaguses on the inside thereof, together with an aqueous solution containing one or more food additives. These canned asparaguses do not allow subsequent elaboration of the packaged product without first opening the package, therefore requiring the opening of the package and the removal of the asparaguses for the processing thereof outside of the package.

Now it has been surprisingly found that it is possible to conserve fresh asparaguses and, furthermore, to process them, if so desired, inside of the same package in which they are packaged, for example to cook or boil them, without needing to open the package and remove the asparaguses. This can be achieved by packaging the fresh asparaguses in a plastic material package, together with an aqueous solution comprising at least one food additive, and in the presence of a modified filling comprising oxygen, carbon dioxide and nitrogen. Thus, fresh asparaguses can be conserved, maintaining their appearance, texture and flavor for a long time, making possible their exportation, among others, possible. The food product thus packaged has the additional advantage of being able to be processed without needing to open or perforate the package, and without needing to remove the asparaguses, thus simplifying the handling and culinary processing thereof.

### BRIEF DESCRIPTION OF THE DRAWINGS

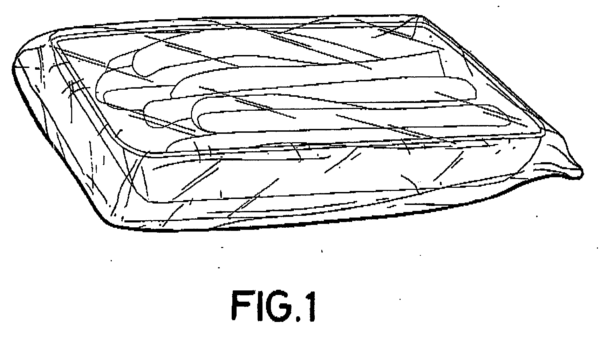

Figure 1 shows a package of fresh, thick caliber asparaguses, provided by this invention, where it can be seen that the asparaguses have been packaged in a plastic package with a tray.

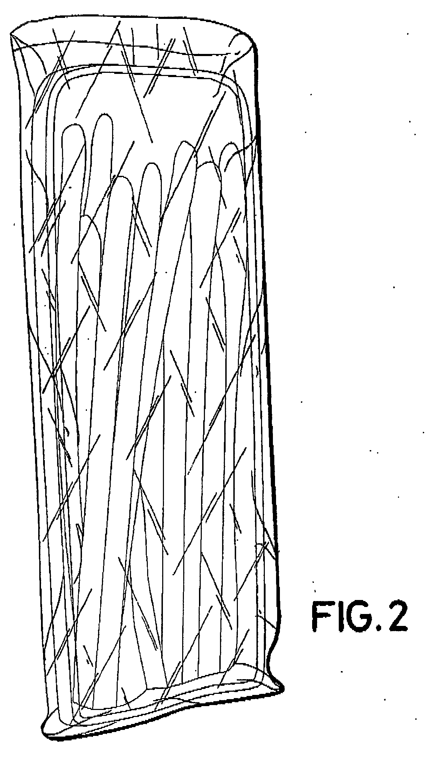

Figure 2 shows a package of fresh, fine caliber asparaguses, provided by this invention, where it can be seen that the asparaguses have been packaged in a plastic package with a tray.

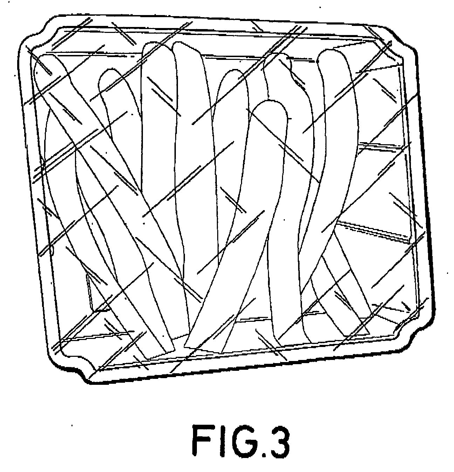

Figure 3 shows a package of fresh, medium caliber asparaguses, provided by this invention, where it can be seen that the asparaguses have been packaged in a plastic package with a tray.

### DETAILED DESCRIPTION OF THE INVENTION

The invention provides a packaged food product, hereinafter, product of the invention, comprising a sealed plastic material package, containing inside
a) whole or chopped fresh asparaguses,
b) an aqueous solution comprising at least one food additive, and
c) a gas filling comprising a mixture of oxygen, carbon dioxide and nitrogen.

The asparaguses forming part of the product of the invention are white or green fresh asparaguses of any caliber (thick, medium or fine) and they can be peeled or unpeeled. The asparaguses can also be whole or chopped, in which case the product of the invention can contain only buds or other parts of the asparagus.

The package is of a plastic material suitable for packaging food products. The composition of the plastic material is irrelevant as long as said plastic material is high-barrier or susceptible of maintaining the optimal gas ratio so as to allow optimal conservation of the food product, and suitable for packaging foods. In a particular embodiment, the package is completely or partially made of a thermoplastic material, which allows sealing it by means of heat sealing. In a specific embodiment, the package comprises a so-called "high-barrier" plastic material, for example, of a material based on polypropylene (PP) and an ethylene vinyl alcohol (EVO) copolymer, arranged in a multilayer PP/EVO/PP manner. In another particular embodiment, the package has means for its hermetic sealing. In another particular embodiment, the package comprises a so-called "smart" film, i.e. a film with selective permeability, for the purpose of maintaining in the package an environment which allows the food product to breathe so as to prevent anaerobiosis conditions but, in turn, forcing the breathing to be the least possible in order to stop, delay or reduce aging and oxidation.

The package can be in any shape, size and suitable thickness according to the size and amount of food product to be contained. In a particular embodiment, the package has the shape of a bag or a tray.

The package can optionally contain within a tray or sheet where the asparaguses are deposited. Said tray or sheet can be of an absorbent or non-absorbent material, and it can be constituted by any material suitable for use in the packaging of food products, for example, paper, cardboard or plastic, such as a thermoplastic material.

The food additive, which may be present in the aqueous solution, can be any of those permitted by the national food legislation and in the permitted amount. As an example, said additive can be chosen among common salt (sodium chloride), preservatives and acidulants. Illustrative examples of authorized additives include, although they are not limited to, sorbic acid (E200), sodium sorbate (E201), potassium sorbate (E202), calcium sorbate (E203), benzoic acid (plant) (E210), sodium benzoate (E211), potassium benzoate (E212), calcium benzoate (E213), ethyl p-hydroxybenzoate (E214), sodium ethyl p-hydroxybenzoate (E215), propyl p-hidroxybenzoate (E216), sodium propyl p-hydroxybenzoate (E217), sulfur dioxide (E220), sodium sulphite (E221), sodium hydrogen sulphite (E222), sodium bisulphite (E223), potassium bisulphite (E224), calcium sulphite (E226), diphenyl (hydrocarbon) (E230), o-phenylphenol (E231), sodium o-phenylphenate (E232), 2-(4-thiazolyl)benzimidazol thiabendazole (E233), hexamethylentetramine (E239), boric acid (E240), sodium tetraborate (E241), sodium nitrite (E250), sodium nitrate (E251), potassium nitrate (E252), acetic acid (E260), potassium acetate (E261), sodium diacetate (E262), calcium acetate (E263), lactic acid (E270), propionic acid (E280), sodium propionate (E281), calcium propionate (E282), carbon dioxide (E290), ascorbic acid (E300), sodium L-ascorbate (E301), calcium L-ascorbate (E302), diacetyl-5,6-ascorbic acid (E303), ascorbyl palmitate (E304), tocopherol-rich extracts of natural origin (E306), synthetic alpha-tocopherol (E307), synthetic gamma-tocopherol (E308), delta-tocopherol (E309), octyl gallate (E311), dodecyl gallate (E312), butylated hydroxyanisole (BHA) (E320), butylated hydroxytoluene (E321), lecithin (E322), sodium lactate (E325), potassium lactate (E326), calcium lactate (E327), citric acid (E330), sodium citrate (E331), potassium citrate (E332), calcium citrate (E333), orthophosphoric acid (E338), sodium orthophosphate (E339), potassium orthophosphate (E340), calcium orthophosphate (E341), alginic acid (E400), sodium alginate (E401), potassium alginate (E402), ammonium alginate (E403), calcium alginate (E404), propylene glycol alginate (E405), agar-agar (E406), carrageenans (E407), furcellaran (E408), locust-bean gum (E410), tamarind-seed flour (E411), guar-bean meal, guar gum (E412), tragacanth gum (E413), acacia gum (gum arabic) (E414), sorbitol (E420), mannitol (brake) (E421), pectin (E440), sodium and potassium polyphosphate (E450), microcrystalline cellulose (E460), methylcellulose (E461), ethylcellulose (E462), hydroxypropyl cellulose (E463), ethyl methyl cellulose (E465), carboxy methyl cellulose (E466), sodium, potassium or calcium salt of food fatty acids (E470), sucrose esters and food fatty acids (E473), mixtures of sucrose esters and non-polymerized mono- and diglycerides of food fatty acids (E474), non-polymerized polyglycerol esters of food fatty acids (E475), stearoyl-2-lactylate (E480), sodium stearoyl-2-lactylate (E481), calcium stearoyl-2-lactylate (E482), stearyl tartrate (E483), etc. In a particular embodiment, said aqueous solution comprising at least one food additive is an aqueous solution comprising water, salt, citric acid, ascorbic acid, calcium lactate, potassium sorbate, or mixtures thereof.

The aqueous solution comprising at least one food additive can be in a variable amount relative to the food product amount, although normally, the aqueous solution/food product weight ratio will be lower than 5, e.g. lower than 1. In a particular embodiment, said aqueous solution/food product weight ratio is approximately 0.04.

The gas filling existing among the asparaguses, the conserving solution and the inner part of the package comprises a mixture of oxygen (O₂), carbon dioxide (CO₂) and nitrogen (N₂). This gas filling is achieved by removing all or part of the air, typically equal to or greater than 30%, preferably equal to or greater than 50%, from the package by any conventional method, for example, by means of entrainment, sweeping or vacuum, and replacing it with said gas mixture. This modification operation of the package filling is carried out before sealing the package, once the asparaguses and aqueous solution have been deposited. The different gases constituting said gas mixture may either be added separately or previously mixed together among each other. The O₂:CO₂:N₂ ratio may vary within a broad range. In a particular embodiment, said O₂:CO₂:N₂ ratio is 2.6:3:1 by volume.

The whole or chopped asparaguses contained in the product of the invention have the appearance, texture and flavor of the fresh product.

The product of the invention is fresh and has the distinctive feature that it can be used directly, without needing to openthe package and remove the asparaguses, or to perforate it, in the elaboration of a cooked product, for example, it can be introduced in a microwave oven for its culinary processing, for example, boiled or steamed, depending on the water content (aqueous solution) present in the product of the invention. The culinary processing of the food product will be determined by the consumer's tastes.

The invention also provides a process for obtaining the product of the invention, i.e. asparaguses packaged in a plastic material package containing within, besides the whole or chopped fresh asparaguses, an aqueous solution comprising at least one food additive, and a mixture of oxygen, carbon dioxide and nitrogen, hereinafter process of the invention, said process comprising the steps of:
a) introducing said whole or chopped fresh asparaguses and said aqueous solution comprising at least one food additive, in said plastic material package;
b) removing all or part of the air contained inside of the package containing within said asparaguses and said aqueous solution comprising at least one food additive;
c) adding a gas mixture comprising oxygen, carbon dioxide and nitrogen; and
d) sealing the package.

The characteristics of the asparaguses, the aqueous solution comprising at least one food additive, the gas filling comprising oxygen, carbon dioxide and nitrogen, as well as the features of the packages have been previously mentioned in relation to the product of the invention.

The introduction of the whole or chopped asparaguses, as well as the introduction of said aqueous solution comprising at least one food additive, into said plastic material package is carried out by conventional methods, for example, by manual or mechanical methods. The order of addition of both the food products and the aqueous solution is irrelevant. This step can be carried out, if desired, by controlling either the weight of the food product to be packaged or the number of units of asparaguses (or pieces of asparaguses) to be packaged.

Once the asparaguses and the aqueous solution comprising at least one food additive have been introduced into the package, all or part of the air contained inside of the package is then removed. The removal of air can be done by any conventional method, for example by vacuum or entrainment. Then, a gas mixture composed of oxygen, carbon dioxide and nitrogen is introduced by any conventional method, for example, either by means of injection of said previously formed gas mixture or by means of injection of each one of the component gases of said gas mixture. Subsequently, if desired, the desired food additives, which had not been previously incorporated, are added in order to obtain a "ready-to-use" product.

Finally, the package is sealed by conventional methods, depending on the material of the package. In a particular embodiment, the sealing of a package made of a thermoplastic is carried out by heat sealing.

The process of the invention includes a series of previous steps, such as picking the asparaguses, peeling, washing and optionally, the scalding and cutting thereof, which are carried out by means of conventional methods. Scalding, which serves to inactivate the enzymes naturally present in the asparaguses, may be carried out before or after peeling the asparaguses and consists of applying a thermal treatment at a temperature and for a suitable time period so as to inactivate the enzymes. Peeling of the asparaguses, which consists in removing the outer part corresponding to the skin of the asparagus, may be carried out by any suitable conventional method, for example, by means of a mechanical or chemical process. Similarly, washing of the asparaguses is carried out by conventional methods, for example by means of immersion and/or spraying in/with water or with an aqueous solution comprising any additive permitted by the national food legislation.

The following example illustrates the invention and should not be considered limiting of the scope thereof.

### EXAMPLE 1

### Packaging fresh asparaguses in a plastic package

White and green fresh asparaguses are subjected to a scalding process for 1 minute in water steam at 90°C, are peeled by means of a mechanical process comprising the use of rotary knives suitable for peeling asparaguses and immediately after, water is sprayed on the peeled asparaguses for 1 minute. High-barrier 100 m PP/EVO/PP plastic packages are filled with the previously treated asparaguses (380 g), and common salt (4 g) and water (3 ml) are added.

Then, the air existing in the packages is removed by means of vacuum and is substituted with a mixture of O₂:CO₂:N₂, which has the following composition 40:45:15 (volume). Finally, the package is heat-sealed.

## Claims

1. A packaged food product comprising a sealed, plastic material package, containing on the inside thereof
a) whole or chopped, peeled fresh asparaguses,
b) an aqueous solution comprising at least one food additive, and
c) a gas filling comprising a mixture of oxygen, carbon dioxide and nitrogen.

2. A packaged food product according to claim 1, wherein said fresh asparaguses are optionally peeled, white or green asparaguses, of any size and caliber.

3. A packaged food product according to claim 1, wherein said package comprises a plastic material suitable for packaging food products.

4. A packaged food product according to claim 3, wherein said package comprises a thermoplastic material.

5. A packaged food product according to claim 3, wherein said package comprises a high-barrier type plastic material.

6. A packaged food product according to claim 5, wherein said package comprises a plastic material based on polypropylene (PP) and ethylene vinyl alcohol (EVO) copolymer, constituted in a multilayer PP/EVO/PP arrangement.

7. A packaged food product according to claim 3, wherein said package comprises a film with selective permeability, which maintains the optimal gas ratio so as to allow optimal conservation of the food product.

8. A packaged food product according to claim 1, wherein said package optionally contains on the inside thereof a tray or sheet whereon the whole or chopped asparaguses are deposited.

9. A packaged food product according to claim 7, wherein said tray or sheet whereon the whole or chopped fresh asparaguses are deposited, is optionally of an absorbent material.

10. A packaged food product according to claim 1, wherein the food additive contained in said aqueous solution comprising at least one food additive is selected among common salt (sodium chloride), preservatives and acidulants.

11. A packaged food product according to claim 10, wherein said aqueous solution comprising at least one food additive, is an aqueous solution comprising water, salt, citric acid, ascorbic acid, calcium lactate, potassium sorbate, or mixtures thereof.

12. A packaged food product according to claim 10, wherein the weight ratio between said aqueous solution comprising at least one food additive and the asparaguses contained in the package is lower than 5.

13. A packaged food product according to claim 1, wherein the O₂:CO₂:N₂ ratio present in the gas filling is 2.6:3:1, by volume.

14. A process for obtaining a packaged food product according to any of claims 1 to 13, comprising the steps of:
a) introducing peeled, whole or chopped fresh asparaguses and an aqueous solution comprising at least one food additive, in a plastic material package;
b) removing all or part of the air contained inside of the package containing on the inside thereof said asparaguses and said aqueous solution comprising at least one food additive;
c) adding a gas mixture comprising oxygen, carbon dioxide and nitrogen; and
d) sealing the package.

15. A process according to claim 14, wherein the introduction of the whole or chopped asparaguses, as well as the introduction of said aqueous solution comprising at least one food additive, within said plastic material package is carried out by manual or mechanical methods.

16. A process according to claim 14, wherein the introduction of the whole or chopped asparaguses, as well as the introduction of said aqueous solution comprising at least one food additive, within said plastic material package is carried out by controlling, if so desired, either the weight of the asparaguses to be packaged or the number of units of asparaguses or pieces of asparaguses to be packaged.

17. A process according to claim 14, wherein the removal of all or part of the air contained within the package is carried out by means of entrainment or vacuum.

18. A process according to claim 14, wherein the introduction of the gas mixture composed of oxygen, carbon dioxide and nitrogen is carried out by means of injection of said previously formed gas mixture, or by means of injection of each one of the components separately.

19. A process according to claim 14, furthermore comprising the addition of the desired food additives prior to sealing the package.

20. A process according to claim 14, wherein the sealing of the package is carried out by means of heat sealing.
